# EUROPÄISCHE PATENTSCHRIFT

(11) **EP 3 750 394 B1**
(45) Veröffentlichungstag und Bekanntmachung des Hinweises auf die Patenterteilung: **03.07.2024**
(21) Anmeldenummer: 20174339.0
(22) Anmeldetag: 13.05.2020
(51) Int. Cl.: A01D 46/30, A01G 18/70

(54) **SYSTEM ZUR KULTIVIERUNG UND ERNTE VON PILZEN**
SYSTEM FOR CULTIVATING AND HARVESTING MUSHROOMS
SYSTÈME DE CULTURE ET DE RÉCOLTE DE CHAMPIGNONS

(30) Priorität: 21.05.2019 DE 102019113516
(43) Veröffentlichungstag der Anmeldung: 16.12.2020
(73) Patentinhaber: Pilzkulturen Wesjohann GbR, 49429 Visbek (DE)
(72) Erfinder: Vogt, Christian, 49393 Lohne (DE); Kruse, Torben, 49685 Emstek (DE)
(74) Vertreter: Schneiders & Behrendt Bochum

(56) Entgegenhaltungen:
- EP-A2- 0 100 207
- WO-A1-2016/029299
- WO-A1-2016/116402
- DE-A1-102015 105 606
- JP-A- 2008 206 438
- US-A- 3 120 091

## Beschreibung

Die Erfindung betrifft ein System zur Kultivierung und Ernte von Pilzen, mit wenigstens einem Pflückgestell, wobei die auf einem Substrat wachsenden Pilze auf dem Pflückgestell in wenigstens einer Ebene angeordnet sind, wenigstens einem Transportband, das wenigstens eine Ausnehmung zur Aufnahme der geernteten Pilzen aufweist, und wenigstens einem Automaten mit Greiforgan, der die auf dem Transportband aufgenommenen Pilze vom Transportband nimmt und sie in Behältnisse legt.

Allgemein ist bekannt, dass Pilze in klimatisierten und je nach Pilzart in abgedunkelten oder hellen Räumen gezüchtet werden. Die auf einem Substrat, wachsenden Pilze sind dabei bevorzugt in mehreren Ebenen übereinander auf Stellagen in Beeten angeordnet, wobei das Substrat eine auf die Pilzart abgestimmte Zusammensetzung aufweist. Hierdurch wird der Zuchtraum möglichst effizient genutzt und die für die Kultivierung erforderliche Bodenfläche möglichst gering gehalten. Nachdem die Pilze eine bestimmte Größe erreicht haben, werden sie in regelmäßigen Abständen manuell abgeerntet. Damit die Pilze möglichst effektiv gepflückt werden können, ist es aus dem Stand der Technik bekannt, die erntereifen Pilze auf ein Pflückgestell zu überführen. Auf dem Pflückgestell befinden sich die Pilze bevorzugt in einer Ebene, so dass die neben dem Gestell auf dem Boden stehenden Pflückerinnen an die Pilze gut herankommen und die Pilze ohne Zusatzeinrichtungen, wie Podeste oder Lifte, leicht pflücken können. Die Pflückgestelle weisen somit eine geeignete Arbeitshöhe auf. Die Pflückerinnen pflücken bei den bekannten Systemen die Pilze direkt in Behälter, in denen die Pilze später dann auch in den Handel kommen. Die Pflückerinnen haben dabei dafür Sorge zu tragen, dass jeder Behälter das korrekte Füllgewicht erhält.

Nachteilig an dem bekannten System ist, dass sich damit nur beschränkte Pflückleistungen erzielen lassen, da der gesamte Pflück- und Packvorgang manuell vollzogen wird. Unter Pflückleistung versteht man die Menge von Pilzen, die pro Zeiteinheit geerntet und handelsfertig verpackt werden. Im Pilzanbau machen die Pflückkosten den größten Anteil der Produktionskosten aus, so dass ein Bedarf an Systemen besteht, die eine Erhöhung der Pflückleistung ermöglichen.

Bekannt ist es weiterhin aus der DE 10 2015 105 606 A1, zum Abpacken der gepflückten Pilze in für den Verkauf im Einzelhandel bestimmten Behältnissen (Schalen) einen Automaten zu verwenden, dem die Pilze mittels eines Förderers zugeführt werden, wobei ein Greiforgan des Automaten die Pilze von dem Förderer aufnimmt und in die in seinem Zugriffbereich befindlichen Schalen unter gleichzeitiger Wiegung derselben ablegt. Auf diese Weise werden die Schalen vollautomatisch mit dem gewünschten Gewicht befüllt. Es zeigt sich, dass die Handhabung der empfindlichen Pilze mit dem Greiforgan problematisch ist. Das Greiforgan kann die Pilze bei zu festem Ergreifen beschädigen. Bei zu sanftem Greifen werden die Pilze nicht zuverlässig gegriffen und fallen häufig aus dem Greiforgan heraus.

Es ist daher Aufgabe der Erfindung, ein verbessertes System zur Kultivierung und Ernte von Pilzen anzugeben, das eine effektive, sichere und schnelle Ernte ermöglicht. Insbesondere sollen die Pflückkosten einschl. des Abpackens der Pilze in Schalen reduziert werden.

Gelöst wird diese Aufgabe durch ein System zur Kultivierung und Ernte von Pilzen mit den Merkmalen des Anspruchs 1.

Durch den Laserscanner werden dreidimensionale Geometriedaten der von dem Transportband aufgenommenen Pilze mit hoher Genauigkeit (bis in den Submillimeterbereich) erfasst. Mit der Erfassung der dreidimensionalen Geometriedaten wird die Form, Größe, Position und/oder Ausrichtung der in der Ausnehmung auf dem Transportband aufgenommenen Pilze ermittelt, wodurch das Greiforgan präzise zum Aufnehmen der Pilze von dem Transportband durch den Automaten gesteuert werden kann. Hierzu wertet die Auswerteeinrichtung die erfassten dreidimensionalen Geometriedaten der Pilze aus und übermittelt die Daten an den Automaten, der hieraus Befehle zur Ansteuerung des Greiforgans ableitet. Die Steuerung erfolgt bevorzugt in der Weise, dass die Greifbewegung jeweils genau an die Geometrie des einzelnen Pilzes angepasst ist. Die Bewegung des Greiforgans und die dabei erzeugte Greifkraft kann insbesondere so abgestimmt werden, dass die Kraft einerseits ausreicht, um den Pilz sicher und zuverlässig zu fassen, andererseits die Kraft so gering bleibt, dass Beschädigungen der Pilze vermieden werden.

Bei einer bevorzugten Ausgestaltung bestimmt die Auswerteeinrichtung zusätzlich das Einzelgewicht der Pilze anhand der dreidimensionalen Geometriedaten. Es zeigt sich, dass das Einzelgewicht der Pilze anhand der Geometriedaten hinreichend zuverlässig bestimmt werden kann. Bevorzugt erfolgt dies anhand einer vorab durchgeführten Kalibrierung, damit das artspezifische und je nach Umgebungsbedingungen auch schwankende spezifische Gewicht der Pilze Berücksichtigung finden kann. Gegenüber dem Stand der Technik werden dadurch die Erntekosten weiter reduziert, weil die Wiegung beim Befüllen der Schalen mit den Pilzen entfallen kann.

Aufgrund des vorzugsweise neben dem Pflückgestell verlaufenden Transportbandes können die Pflückerinnen sehr effizient arbeiten. Sie pflücken die Pilze von den Beeten und legen sie direkt auf das Transportband ab. Die dabei zurückzulegenden Wege sind minimal. Das Transportband fördert die Pilze dann zur Weiterverarbeitung, die vorteilhafterweise automatisiert ist. Hierdurch kann die Pflückleistung wesentlich erhöht werden, so dass die Kosten insgesamt gesenkt werden.

Das erfindungsgemäße Transportband ist so ausgebildet, dass es einfach mit den einzeln geernteten Pilzen bestückt werden kann. Idealerweise verläuft das Transportband im Wesentlichen parallel zu dem Pflückgestell. Das Transportband kann von dem Pflückgestell unabhängig ausgebildet sein. Dies bedeutet, dass das Transportband eine Tragkonstruktion bzw. Rahmenkonstruktion aufweist, die das Band trägt. Es ist aber auch denkbar, dass das Transportband an dem Pflückgestell befestigt bzw. in dieses konstruktiv integriert ist. Hierbei kann von einer eigenen Tragkonstruktion des Transportbands abgesehen werden. Bevorzugt ist das Transportband mit variabler Geschwindigkeit motorisch beweglich. Durch die variable Einstellbarkeit der Geschwindigkeit ist eine Anpassung an die Pflückgeschwindigkeit der die Pilze erntenden Personen möglich.

Vorteilhafterweise erstreckt sich das Transportband entlang der gesamten Länge des Pflückgestells. Dies bietet den Vorteil, dass die die Pilze erntenden Personen überall entlang des Pflückgestells stehen können und die gepflückten Pilze unmittelbar auf dem Transportband zur Weiterverarbeitung ablegen können. Das Pflücken kann somit sehr effektiv erfolgen. Besonders bevorzugt erstreckt sich das Transportband über wenigstens ein Ende des Pflückgestells, idealerweise über dasjenige Ende, an dem sich ein Automat zur automatisierten Verpackung der Pilze befindet, hinaus. Hierdurch wird erreicht, dass der Automat gut auf die geernteten Pilze zugreifen kann.

Weitere vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass an dem Transportband eine Abtrennvorrichtung zum Abtrennen der Stielenden der auf dem Transportband aufgenommenen Pilze angeordnet ist, wobei die Abtrennvorrichtung mindestens eine in der Schnittposition verstellbare Schneide aufweist. Das Abtrennen der unteren Enden der Pilzstiele gehört zum Erntevorgang und ist für die Qualität der Endprodukte unerlässlich. Während die auf dem Transportband befindlichen Pilze transportiert werden, passieren sie die Abtrennvorrichtung, wodurch deren Pilzstielenden automatisch abgeschnitten werden. Durch das automatisierte Abtrennen, das im Stand der Technik manuell durch die Pflückerinnen erfolgt, kann die Pflückleistung des erfindungsgemäßen Systems weiter verbessert werden. Ein weiterer Vorteil der automatischen Kürzung der Pilzstiele ist, dass ein möglichst gleichmäßiger u. sauberer Schnitt der Pilzstiele erfolgt. Hierzu weist die Abtrennvorrichtung bevorzugt eine rotierende Schneide, besonders bevorzugt zwei gegenläufig rotierende Schneiden (z.B. Kreismesser) auf, wobei die Schneiden direkt unterhalb des Transportbandes, wo die Stiele der Pilze durch das Transportband nach unten ragen, angeordnet sind. Die Pilze werden mittels des Transportbandes an den rotierenden Schneiden vorbeigeführt bzw. zwischen den gegenläufigen Kreismessern hindurch geführt, wobei die Stielenden zuverlässig gemäß der gewünschten Länge abgetrennt werden. Durch einen nicht zu kurzen Abschnitt des Stiels bei der Ernte wird das Einzelgewicht der Pilze erhöht, wodurch insgesamt ein höherer Ernteertrag geschaffen werden kann. Mit der in der Schnittposition verstellbaren Schneide kann die Abtrennvorrichtung beispielsweise an länder- oder kundenspezifischen Anforderungen hinsichtlich der Stiellänge oder des Schnittwinkels angepasst werden.

Besonders bevorzugt ist eine Ausführungsform, die vorsieht, dass die Schneide höhenverstellbar ist, um die Stielenden der auf dem Transportband aufgenommenen Pilze in unterschiedlichen Stielhöhen abzutrennen. Über die Höhenverstellung der Schneide kann die Stiellänge der Pilze an länder- oder kundenspezifischen Anforderungen angepasst werden, bevor die Pilze von dem Greiforgan automatisiert in entsprechenden Anforderungen, Qualitäten, Größen, Ländern oder Kunden zugeordneten Behältnissen abgelegt werden. Ein solches Behältnis ist zum Beispiel eine Schale (aus Kunststoff oder Pappe), in der die Pilze für den Einzelhandel verpackt werden.

Eine besonders vorteilhafte Ausführung der Erfindung bezieht sich darauf, dass es sich bei der Ausnehmung des Transportbandes um wenigstens ein in das Transportband eingelassenes Loch handelt. In dem Loch lassen sich die Pilze einfach nach dem manuellen Pflücken durch die Pflückerinnen schnell einsetzen, um die weitere automatisierte Handhabung der Pilze durch Abtrennvorrichtung und Greiforgan zu erleichtern. Dabei ist der Lochdurchmesser zweckmäßig größer als der größte zu erwartende Pilzstieldurchmesser und gleichzeitig kleiner als der kleinste zu erwartende Pilzkopfdurchmesser. Der in das Loch eingesetzte Pilz liegt dann mit der Unterseite des Kopfes auf dem Transportband an dessen Oberseite auf, während der Stiel das Loch nach unten durchragt.

Gemäß einer vorteilhaften Ausgestaltung der Erfindung ist vorgesehen, dass das Transportband mehrere eingelassene Löcher aufweist, wobei die Löcher einen gleichmäßigen Abstand zueinander entlang der Längsstreckung des Transportbandes aufweisen. Über den gleichmäßigen Abstand der eingelassenen Löcher zueinander kann das Greiforgan die Pilze mit einer konstanten Rate von dem Transportband nehmen, was die Ansteuerung durch den Automaten vereinfacht. Die Löcher sind dabei bevorzugt entlang des gesamten Transportbands angeordnet. Die Löcher können dabei unterschiedliche Durchmesser aufweisen. Der Abstand der Löcher ist zweckmäßig so gewählt, dass die Pilze voneinander ausreichend beabstandet sind, so dass diese mittels des Greiforgans zuverlässig gegriffen werden können.

Anstelle von Löchern kann es sich bei der Ausnehmung des Transportbands auch um wenigstens einen in Längsrichtung des Transportbands verlaufenden Schlitz handeln. Die die Pilze erntenden Personen stecken die Pilze mit den Stielen nach unten einzelnen in den Schlitz ein. Der Schlitz sollte so ausgebildet sein, dass er eine Breite aufweist, die kleiner ist als der minimale Pilzkopfdurchmesser und größer als der maximale Stieldurchmesser, so dass die Pilze mit dem Rand des Pilzkopfes jeweils seitlich neben dem Schlitz auf dem Transportband aufliegen.

Der Schlitz erstreckt sich vorteilhafterweise als durchgehender Schlitz entlang des gesamten Transportbandes. Dies bietet den Vorteil, dass die Pilze beliebig nebeneinander auf dem Band abgelegt werden können.

Zur Bildung des Schlitzes kann das Transportband zwei bandförmige, parallel und voneinander beabstandete Elemente aufweisen, die sich in Längsrichtung des Transportbands erstrecken. Idealerweise bestehen die Elemente aus einem flexiblen/elastischen Material. Durch diese Ausgestaltung wird ermöglicht, dass Pilze unterschiedlicher Größe transportiert werden können. Weisen die Pilze einen besonderes dicken Stiel auf, dann gibt das Material nach und der Schlitz weitet sich auf. Des Weiteren wird durch die Verformbarkeit erreicht, dass die Pilze, die sehr empfindlich gegenüber auf ihre Oberfläche wirkende Kräfte sind, beim Einführen in den Schlitz nicht beschädigt werden.

Grundsätzlich ist es auch denkbar, dass das Transportband eine Mehrzahl an Schlitzen aufweist. Die Schlitze können identisch sowie unterschiedlich lang und/oder breit ausgebildet sein. Die Schlitze können ferner hintereinander bzw. in Reihe oder aber auch versetzt, vorteilhafterweise parallel zueinander, angeordnet sein. Denkbar ist weiter, dass die Schlitze einzelnen Pflückplätzen zugeordnet sind. Unter Pflückplatz ist ein Ort zu verstehen, an dem die Pilze vom Beet gepflückt werden, an dem sich also eine Person befindet. Dies bietet den Vorteil, dass das Transportband auch noch für die hinteren Pflückplätze leere Schlitze aufweist, in die die Pflückerinnen die gepflückten Pilze einstecken können. Mit hinteren Pflückplätzen sind erfindungsgemäß diejenigen Plätze gemeint, die das Transportband erst erreicht, nachdem es bereits andere Pflückplätze passiert hat.

Besonders bevorzugt ist eine Ausführungsform, die vorsieht, dass die Behältnisse beidseitig des Transportbandes im Griffbereich des Greiforgans angeordnet sind. Auf diese Weise kann der Automat die Pilze auf beiden Seiten des Transportbandes schnell in unterschiedliche Behältnisse legen und so beispielsweise nach länder- oder kundenspezifischen Anforderungen, wie Qualität, Größe, Durchmesser, Stiellänge, in den Ländern oder den Kunden zugeordneten Behältnissen sortieren. Mit der beidseitigen Anordnung der Behältnisse im Griffbereich des Greiforgans ist somit eine besonders schnelle Sortierung der Pilze vom Transportband durch den Automaten möglich.

Vorteilhafterweise weist das System zwei Transportbänder auf. Die Transportbänder erstrecken sich dabei auf sich gegenüberliegenden Seiten des Gestells und erstrecken sich bevorzugt entlang der gesamten Längserstreckung des Pflückgestells. Auf diese Weise können Pflückerinnen auf beiden Seiten des Pflückgestells arbeiten.

Eine besonders vorteilhafte Ausführung der Erfindung bezieht sich darauf, dass die vom Greiforgan mit Pilzen gefüllten Behältnisse über eine Fördereinrichtung vom Automaten automatisch zu einer Sammelstation gefördert werden. Mit der automatischen Sammlung der Behältnisse können diese anschließend für den Versand verpackt werden, ohne dass die Pflückerinnen bei der Ernte ihren Arbeitsplatz am Pflückgestell verlassen müssen.

Eine besonders vorteilhafte Ausführung der Erfindung sieht vor, dass das Greiforgan mehrere, vorzugsweise zwei nach Art eines Zangengreifers aufeinander zu und voneinander weg bewegliche Greiffinger aufweist, wobei die Greiffinger verformbare Auflageelemente aufweisen. Über die verformbaren Auflageelemente an den Greiffingern ist ein wirksames und dennoch sanftes Ergreifen der von dem Transportband aufgenommenen Pilze durch das Greiforgan möglich. Mit den Greiffingern lassen sich die Pilze leicht durch das Greiforgan von dem Transportband aufnehmen. Um die Pilze aufzunehmen, legen sich die Greiffinger des Greiforgans an den Pilzkopf an. Dabei liegt der Pilzkopf auf den verformbaren Auflageelementen auf, die sich entsprechend der Oberflächengeometrie des Pilzkopfes an diesen sanft anlegen und so eine Beschädigung beim Zugriff verhindern. Gleichzeitig wird bei der Verformung der Auflageelemente ein Kraft- und/oder Formschluss hergestellt, der ein sicheres und zuverlässiges Greifen gewährleistet.

Eine vorteilhafte Ausführung der Erfindung sieht vor, dass die verformbaren Auflageelemente als elastische Lamellen ausgeführt sind, die nebeneinander, parallel zueinander und parallel zur Längserstreckung des Greiffingers angeordnet sind. Die Ausführung der Auflageelemente als elastische Lamellen ermöglicht ein beschädigungsfreies und sicheres Umschließen der Pilzköpfe bei der Aufnahme von dem Transportband. Die elastischen Lamellen bieten einen guten Halt, ohne dass die empfindlichen Pilze beschädigt werden, da die Verformung der Lamellen eine einfache Anpassung der Auflageelemente an die Geometrie der Pilze ermöglicht.

Besonders vorteilhaft ist eine Ausführungsform, die vorsieht, dass die Greiffinger mit einer wechselbaren Elastomerhülle, vorzugsweise aus Latex, überzogen sind, welche die Auflageelemente abdeckt. Mit der Latexhülle wird den Greiffingern im Bereich der Auflageelemente ein ausreichender Reibwert verliehen, um die Pilze sicher durch eine Greifbewegung des Greiforgans von dem Transportband aufzunehmen. Die gegebenenfalls noch feuchten Pilze werden mit der Latexhülle zuverlässig von den Greiffingern des Greiforgans gehandhabt. Bei Verschmutzung oder Verschleiß lässt sich die wechselbare Latexhülle über den Auflageelementen einfach erneuern, um einen ausreichenden Reibwert für das sichere Ergreifen der Pilze wieder herzustellen.

Eine vorteilhafte Ausgestaltung sieht vor, dass der Automat ein Magazin für zu befüllende Behältnisse aufweist. Mit einem solchen Magazin können die zu befüllenden Behältnisse einfach am Automaten bevorratet werden, sodass eine schnelle Befüllung durch den Automaten sichergestellt werden kann.

Besonders vorteilhaft ist eine Ausführungsform, die vorsieht, dass das Magazin auswechselbar ist oder verstellt werden kann, um Behältnisse unterschiedlicher Geometrien aufnehmen zu können. Mit der Bevorratung unterschiedlicher Behältnisse können kunden- oder länderspezifische Anforderungen mit geringem Aufwand befriedigt werden. Die Aufnahme unterschiedlicher Behältnisse durch Verstellung des Magazins oder der Wechsel des Magazins zur Aufnahme unterschiedlicher Behältnisse macht die Anpassung des Systems an kunden- oder länderspezifische Anforderungen einfach möglich.

Bevorzugt handelt es sich bei dem Automaten um einen Roboter, insbesondere einen Industrieroboter. Das Greiforgan des Automaten kann auch als Sauggreifer ausgebildet sein. Besonders bevorzugt erfasst der Sauggreifer die Pilze von oben, d.h. am Pilzkopf. Der Sauggreifer kann einen Saugkopf aufweisen, wobei durch Erzeugung eines Unterdrucks der Pilz jeweils angesaugt, d.h. gegriffen wird. Idealerweise ist der Automat als Mehrfachgreifer ausgebildet. Dies bedeutet, dass er gleichzeitig mehrere Pilze aufnehmen kann.

Der Automat ist bevorzugt auf einem mobilen Gestell angeordnet. Idealerweise weist das Gestell Rollen auf, so dass es manuell an das Pflückgestell herangeschoben werden kann. Das Gestell kann Fixierelemente aufweisen, mit denen es am Pflückgestell fixiert werden kann. Hierdurch wird sichergestellt, dass während des Einsatzes das mobile Gestell sicher am Pflückgestell angeordnet ist, so dass ein einwandfreies Befüllen der Behältnisse ermöglicht wird.

Der Automat ist bevorzugt an der Stirnseite bzw. einem Ende des Pflückgestells angeordnet. Hierdurch gelangen alle auf dem Transportband befindlichen Pilze in den Aktionsradius des Automaten und können von diesem ergriffen und in die Behältnisse gelegt werden. Idealerweise ist der Automat beweglich auf dem mobilen Gestell angeordnet. Dies ist dann besonders von Vorteil, wenn die Pilze auf beiden Seiten entlang des Pflückgestells gepflückt werden und auf entsprechende Transportbänder gelegt werden. Der Automat kann dann wahlweise entweder zur einen Seite oder zur anderen Seite gefahren werden und dort die Pilze aufnehmen und in die Behältnisse legen. Der Automat kann beispielsweise entlang einer Schiene verschiebbar angeordnet sein. Das Verfahren des Automaten kann sowohl manuell wie auch automatisiert erfolgen.

Der Automat kann so ausgebildet sein, dass er die auf dem Transportband befindlichen Pilze nicht einfach der Reihe nach aufnimmt und in Behältnisse legt, sondern selektiert und somit nur ganz bestimmte Pilze ergreift. Durch die Selektion der Pilze ist es zum Beispiel möglich, die Behältnisse mit Pilzen in einer gewünschten Größenverteilung zu befüllen. Ferner lässt sich so gezielt ein Füllgewicht erreichen, das dem Sollgewicht möglichst nahe kommt. Weist das zu befüllende Behältnis zum Beispiel annähernd sein Sollgewicht auf, dann sucht der Automat gezielt nach einem möglichst kleinen Pilz, ergreift diesen und legt ihn in dem Behältnis ab.

Ferner kann das erfindungsgemäße System eine Wiegestation aufweisen. Die Wiegestation dient zur automatischen Kontrolle des Gewichts der Behältnisse mit den darin befindlichen Pilzen. Die Wiegestation befindet sich bevorzugt in unmittelbarer Nähe zum Automaten. Der Automat füllt die geernteten Pilze in Behältnisse, die sich auf der Wiegestation befinden. Die Wiegestation ist vorteilhafterweise so ausgebildet, dass das Gewicht von mehreren Behältnissen gleichzeitig erfasst werden kann. Hierzu weist sie bevorzugt mehrere Wiegeplätze auf. Dies bietet den Vorteil, dass der Automat gleichzeitig mehrere Behältnisse befüllen kann. Der Automat kann die Behältnisse selektiv mit Pilzen nach Größe und Gewicht befüllen, wobei der Automat die Pilze kontinuierlich von dem Transportband greifen kann.

Die Auswerteeinrichtung und der Automat und vorzugsweise auch die Wiegestation sind idealerweise so miteinander verbunden, dass beim Erreichen des Sollgewichts das jeweilige Behältnis aus dem Automaten automatisch entfernt und sodann ein neuer, leerer Behälter zur Befüllung bereitgestellt wird. Idealerweise sind die Auswerteeinrichtung, der Automat und vorzugsweise auch die Wiegestation so miteinander verbunden, dass der Automat kontinuierlich Rückmeldung über das jeweils aktuelle Gewicht des/der zur Befüllung bereitstehenden Behältnisse(s) erhält.

Ferner kann das System so ausgebildet sein, dass die zu befüllenden Behälter, wie zum Beispiel Schalen, automatisch auf eine Füllposition bzw. auf einen Wiegeplatz geführt und nach dem Befüllen automatisch von dieser/diesem entfernt und zur weiteren Handhabung transportiert werden. Zur Zuführung der Behälter kann das System einen oder mehrere Schalenabstapler an sich bekannter Art aufweisen. Der Abtransport voller Behältnisse wird vorzugsweise durch die Fördereinrichtung realisiert, welche die Behältnisse zu der Sammelstation fördert.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: schematische Draufsicht auf ein erfindungsgemäßes System,
- Figur 2: schematische Seitenansicht auf ein erfindungsgemäßes System,
- Figur 3: schematische Draufsicht auf ein erfindungsgemäßes System in einer weiteren Ausgestaltung,
- Figur 4: schematische Seitenansicht auf ein Greiforgan,
- Figur 5: schematische Seitenansicht auf einen Greiffinger und
- Figur 6: schematische Draufsicht auf den Greiffinger.

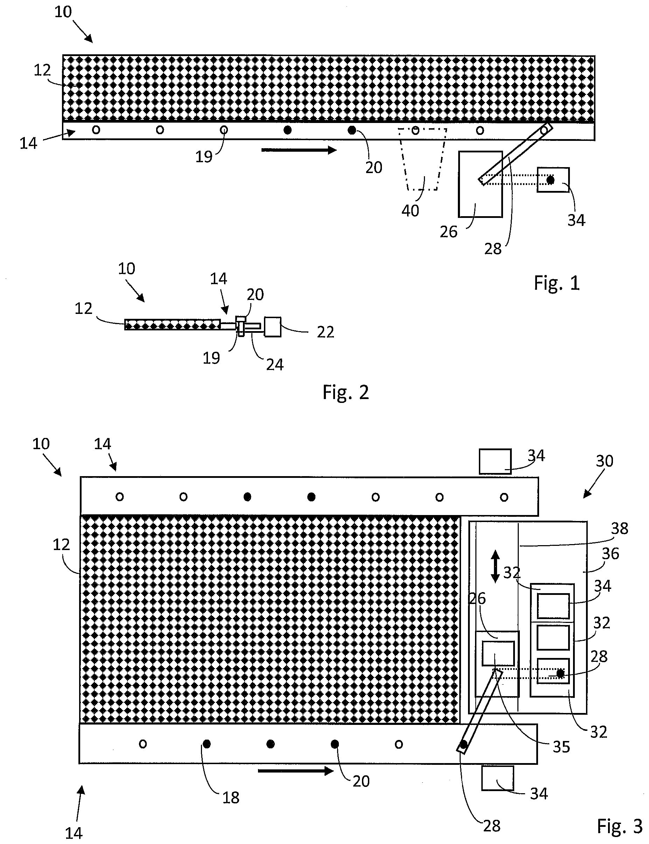

In der Figur 1 mit dem Bezugszeichen 10 bezeichnet ist ein erfindungsgemäßes System in einer möglichen Ausgestaltung schematisch dargestellt. Das System 10 zur Kultivierung und Ernte von Pilzen weist wenigstens ein Pflückgestell 12 auf, wobei die auf einem Substrat wachsenden Pilze 20 auf dem Pflückgestell 12 in wenigstens einer Ebene angeordnet sind. Um den Platz optimal ausnutzen zu können, kann es vorteilhaft sein, dass die Pilze 20 auf mehreren Ebenen übereinander gezüchtet werden. Neben dem Pflückgestell 12 verläuft ein Transportband 14, das idealerweise unmittelbar an das Pflückgestell 12 angrenzt und bevorzugt an diesem befestigt ist. Das Transportband 14 hat eine zur Längserstreckung des Pflückgestells 12 aufweisende Förderrichtung. Die Förderrichtung des Transportbands 14 ist in Figur 1 durch einen Pfeil dargestellt. Erfindungsgemäß weist das Transportband 14 wenigstens eine Ausnehmung 18 zur Aufnahme der geernteten Pilze 20 auf. Die Ausnehmung ist im hier gezeigten Ausführungsbeispiel als in das Transportband 14 eingelassenes Loch 18 ausgebildet. Wie zu erkennen ist, verfügt das Transportband über mehrere entlang der Längsstreckung des Transportbandes 14 eingelassene Löcher 18, die zur Aufnahme von gepflückten Pilzen 20 dienen. Über den gleichmäßigen Abstand der Löcher 18 in dem Transportband 14 kann die Entnahme der Pilze 20 vom Transportband 14 durch das Greiforgan 28 gleichmäßig getaktet gesteuert werden. In Figur 1 erstreckt sich das Transportband 14 entlang der gesamten Länge des Pflückgestells 12. Dies bietet den Vorteil, dass die Pilze 20 nach dem Pflücken unmittelbar auf das Band 14 gelegt werden können. Das Transportband 14 besteht idealerweise aus einem elastischen bzw. flexiblen Material. Hierdurch wird erreicht, dass die Pilze 20, die sehr empfindlich gegenüber auf ihre Oberfläche wirkenden Kräften sind, beim Einführen in die Ausnehmungen 18 nicht beschädigt werden, da das Transportband 14 nachgibt. Nach der Bestückung der Ausnehmungen 18 des Transportbandes 14 mit den von den Plückerlnnen gepflückten Pilzen 20 werden letztere von einem Automaten 26 mit einem Greiforgan 28 automatisiert aufgenommen und in bereitstehende Behältnisse 34 abgelegt. Hierzu erfasst ein Laserscanner 40 die dreidimensionalen Geometriedaten der auf dem Transportband 14 aufgenommenen Pilze. Eine Auswerteeinrichtung wertet die erfassten dreidimensionalen Geometriedaten der Pilze aus, wobei die ausgewerteten Geometriedaten zur Steuerung des Greiforgans 28 und zur Bestimmung des Einzelgewichts der Pilze 20 verwendet werden. Hierzu wird über die dreidimensionalen Geometriedaten das Volumen der einzelnen Pilze 20 bestimmt und über eine vorab erfolgte Kalibrierung (zur Ermittlung des spezifischen Gewichts) das Einzelgewicht der Pilze 20 bestimmt. Über die ausgewerteten Geometriedaten kann das Gewicht der einzelnen Pilze 20 bereits vor Aufnahme durch das Greiforgan 28 bestimmt werden, was die Zuordnung zu den bereitstehenden Behältnissen 34 beschleunigt und exakter macht. Mit der über die ausgewerteten Geometriedaten präziseren Steuerung des Greiforgans 28 können Schäden und Fehler bei der Aufnahme der Pilze 20 verhindert werden.

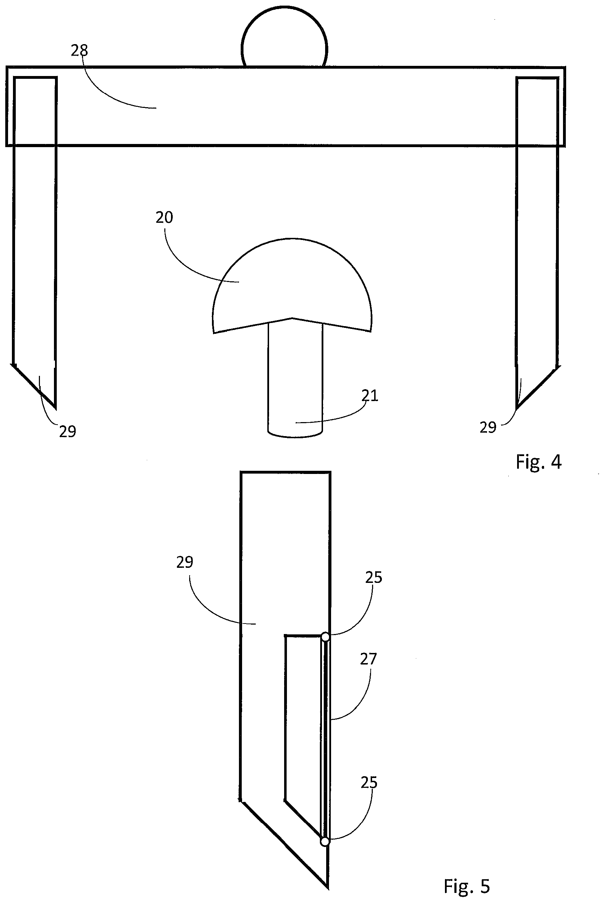

Figur 2 zeigt eine schematische Seitenansicht auf ein erfindungsgemäßes System 10. An dem Transportband 14 ist eine Vorrichtung 22 zum automatischen Abtrennen der Pilzstiele 21 (Fig. 4) angeordnet. Das Abtrennen der Pilzstiele 21 (Fig. 4) gehört zum Erntevorgang und ist für die Qualität der Endprodukte unerlässlich. Die auf dem Transportband 14 befindlichen Pilze 20 passieren auf ihrem Weg zum Abpacken die Abtrennvorrichtung 22, wodurch die Pilzstielenden 21 (Fig. 4) automatisch abgeschnitten werden. Das automatisierte Abtrennen führt zu einer verbesserten Pflückleistung. Die Abtrennvorrichtung 22 weist als Schneidelement eine Klinge bzw. Schneide 24 auf, die vorzugsweise parallel zum Transportband 14 angeordnet ist. Hierdurch erhalten die Pilze 20 einen geraden Schnitt, was besonders vorteilhaft für die Qualität der Pilze 20 ist. Die Schneide 24 der Abtrennvorrichtung 22 kann in der Schnittposition verstellt werden, um beispielsweise schräge Schnitte zu ermöglichen. Außerdem kann die Schneide 24 höhenverstellt werden, um die Pilzstielenden 21 (Fig. 4) der auf dem Transportband 14 aufgenommenen Pilze 20 in unterschiedlichen Höhen abzuschneiden. Hierdurch ist die Abtrennvorrichtung 22 an kunden- und länderspezifische Anforderungen leicht anzupassen. Vorzugsweise erfolgt diese Verstellung der Schnittposition automatisiert.

Figur 3 zeigt eine schematische Draufsicht auf ein erfindungsgemäßes System 10. Das System 10 weist zwei Transportbänder 14 auf. Die Transportbänder 14 erstrecken sich dabei auf sich gegenüberliegenden Seiten des Pflückgestells 12. Vorteilhafterweise erstrecken sich die Transportbänder 14 über wenigstens ein Ende des Pflückgestells 12, idealerweise über das Ende, an dem sich ein Automat 26 befindet, hinaus. Hierdurch wird erreicht, dass der Automat 26 besser auf die gepflückten Pilze 20 zugreifen kann.

An einer Stirnseite des Pflückgestells 12 ist der Automat 26 mit Greiforgan 28 angeordnet, der die Pilze 20 von den Transportbändern 14 nimmt und sie in Behältnisse 34 legt. Bei dem Automat 26 handelt es sich bevorzugt um einen Roboter an sich bekannter Bauart. Der Automat 36 ist auf einem mobilen Gestell 36, angeordnet. Idealerweise weist das Gestell Rollen auf, so dass es manuell an das Pflückgestell herangeschoben werden kann.

Der Automat 26 ist beweglich auf dem mobilen Gestell 36 angeordnet. Hierdurch kann der Automat 26 Pilze 20 von beiden Transportbändern 14 ergreifen und in Behälter 34 legen. Der Automat 26 ist entlang einer Schiene 38 verschiebbar angeordnet, die bevorzugt entlang der Stirnseite des Pflückgestells 12 verläuft. Hierdurch ist der Griffbereich des Greiforgans 28 vergrößert. In dem Griffbereich des Greiforgans 28 befinden sich Behältnisse 34 beidseitig der beiden Transportbänder 14, sodass diese Behältnisse 34 von dem Automaten 26 automatisiert befüllt werden können. Die zu befüllenden Behältnisse 34 werden in einem dem Automaten 26 zugeordneten Magazin 35 bevorratet und vorzugsweise von dem Greiforgan 28 in die Füllposition gestellt, wo die Behältnisse 34 mit den vom Transportband 14 entnommenen Pilzen 20 gefüllt werden. Das Magazin 35 kann gewechselt werden, um Behältnisse 34 unterschiedlicher Geometrien aufnehmen zu können. Alternativ hierzu kann das Magazin 35 auch verstellt werden, um die Aufnahme von Behältnissen 34 unterschiedlicher Geometrien zu ermöglichen.

Das System 10 weist zudem bevorzugt eine Wiegestation 30 auf. Die Wiegestation 30 dient vorteilhafterweise zur zusätzlichen Kontrolle des Gewichts der in den Behältern 34 befindlichen Pilze 20. Die Wiegestation 30 befindet sich in unmittelbarer Nähe zum Automaten 26. Der Automat 26 füllt die geernteten Pilze 20 in die Behälter 34, die sich auf der Wiegestation 30 befinden. Die Wiegestation 30 weist mehrere Wiegeplätze 32 auf, sodass die Wiegestation 30 das Gewicht von mehreren Behältern 34 gleichzeitig und unabhängig voneinander erfassen kann. Hierdurch ist es möglich, dass der Automat 26 gleichzeitig mehrere Behälter 34 befüllen kann.

Die Figur 4 zeigt eine schematische Seitenansicht auf das Greiforgan 28 des Automaten 26 (Fig. 1 oder 3), der nach Art eines Zangengreifers arbeitet. Das Greiforgan 28 verfügt über zwei Greiffinger 29, die aufeinander zu und voneinander weg motorisch beweglich sind und mit welchen die Pilze 20 gegriffen werden können, indem die Greiffinger 29 von beiden Seiten an den Pilz 20 heran gefahren werden.

Aus Figur 5 geht eine detailliertere, schematische Seitenansicht des Greiffingers 29 gemäß Figur 4 hervor. In dieser Darstellung zu erkennen ist, dass die, bevorzugt aus Kunststoff gefertigten Greiffinger 29 verformbare Auflageelemente 27 aufweisen, die als elastische Lamellen ausgeführt sind. Über die angedeuteten Filmscharniere 25 werden die elastischen Lamellen 27 an den Greiffingern 29 gelagert. Beim Aufgreifen der Pilze 20 (Fig. 4) durch das Greiforgan 28 verformen sich die elastischen Lamellen 27, sodass eine Beschädigung der Pilze 20 (Fig. 4) bei der Handhabung durch den Automaten 26 (Fig. 1) verhindert wird. Bei der Verformung der Lamellen 27 (in der Figur 5 nach links) werden diese in einen dahinter liegenden Hohlraum des Greiffingers 29 hinein verlagert. Dadurch wird ein Formschluss des Greiffingers 29 mit dem Pilzkopf hergestellt, so dass der Pilz 20 nicht mehr nach unten aus dem Greiforgan 28 herausfallen kann, selbst wenn der Reibschluss zwischen den Lamellen 27 und dem Pilz 20 nicht ausreicht. Über den hier gezeigten Greiffinger 29 kann eine, nicht gezeigte, wechselbare Latexhülle gezogen werden, welche den Greiffinger 29 schützt und für einen ausreichenden Reibwert zur Aufnahme der Pilze 20 sorgt.

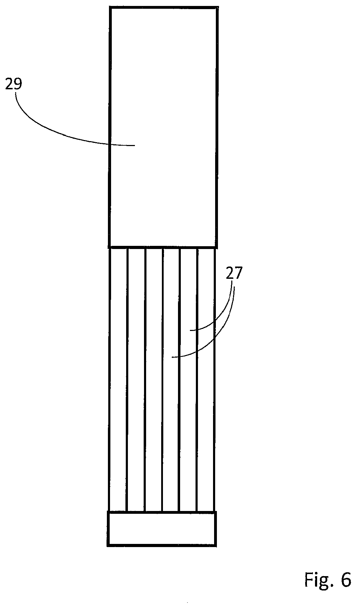

Mit Figur 6 ist eine schematische Draufsicht auf den Greiffinger 29 gemäß Figur 5 gegeben. Hier ist zu erkennen, dass die einzelnen Lamellen 27 durch Schlitze voneinander getrennt sind, sodass die Lamellen 27 sich an die Geometrie der zu greifenden Pilze 20 (Fig. 4) anpassen.

### Bezuaszeichenliste

- 10: System zur Kultivierung und Ernte von Pilzen
- 12: Pflückgestell
- 14: Transportband
- 16: bandförmige Elemente des Transportbands
- 18: Schlitz (Ausnehmung)
- 19: Loch (Ausnehmung)
- 20: Pilz
- 21: Pilzstielenden
- 22: Abtrennvorrichtung zum Abtrennen der Pilzstiele
- 24: Schneide
- 25: Filmscharniere
- 26: Automat
- 27: Auflageelemente
- 28: Greiforgan (Automat)
- 29: Greiffinger (Greiforgan)
- 30: Wiegestation
- 32: Wiegeplatz
- 34: Behältnisse
- 35: Magazin
- 36: mobiles Gestellt
- 38: Schiene
- 40: Laserscanner
- 42: Fördereinrichtung

## Patentansprüche

1. System (10) zur Kultivierung und Ernte von Pilzen (20), mit
- wenigstens einem Pflückgestell (12), wobei die auf einem Substrat wachsenden Pilze (20) auf dem Pflückgestell (12) in wenigstens einer Ebene angeordnet sind,
- wenigstens einem Transportband (14), das wenigstens eine Ausnehmung (18, 19) zur Aufnahme der geernteten Pilzen (20) aufweist, und
- wenigstens einem Automaten (26) mit Greiforgan (28), der die auf dem Transportband (14) aufgenommenen Pilze (20) vom Transportband (14) nimmt und sie in Behältnisse (34) legt,
**gekennzeichnet durch,**
- einen Laserscanner (40), der dreidimensionale Geometriedaten der auf dem Transportband (14) aufgenommenen Pilze (20) erfasst, und
- eine Auswerteeinrichtung, welche die erfassten dreidimensionalen Geometriedaten der Pilze (20) zur Steuerung des Greiforgans (28) auswertet.

2. System (10) nach Anspruch 1, **dadurch gekennzeichnet, dass** die Auswerteeinrichtung das Einzelgewicht der Pilze (20) anhand der dreidimensionalen Geometriedaten bestimmt.

3. System (10) nach Anspruch 1 oder 2, **dadurch gekennzeichnet, dass** an dem Transportband (14) eine Abtrennvorrichtung (22) zum Abtrennen der Stielenden (21) der auf dem Transportband (14) aufgenommenen Pilze (20) angeordnet ist, wobei die Abtrennvorrichtung (22) mindestens eine in der Schnittposition verstellbare Schneide (24) aufweist.

4. Vorrichtung (1) nach Anspruch 3, **dadurch gekennzeichnet, dass** die Schneide (24) höhenverstellbar ist, um die Stielenden (21) der auf dem Transportband (14) aufgenommenen Pilze (20) in unterschiedlichen Stielhöhen abzutrennen.

5. Vorrichtung (1) nach einem der Ansprüche 1 bis 4, **dadurch gekennzeichnet, dass** es sich bei der Ausnehmung (19) des Transportbandes (14) um wenigstens ein in das Transportband (14) eingelassenes Loch (19) handelt.

6. Vorrichtung (1) nach Anspruch 5, **dadurch gekennzeichnet, dass** das Transportband (14) mehrere eingelassene Löcher (19) aufweist, wobei die Löcher einen gleichmäßigen Abstand zueinander entlang der Längsstreckung des Transportbandes (14) aufweisen.

7. Vorrichtung (1) nach einem der vorhergehenden Ansprüche, **dadurch gekennzeichnet, dass** die Behältnisse (34) beidseitig des Transportbandes (14) im Griffbereich des Greiforgans (28) angeordnet sind.

8. Vorrichtung (1) nach einem der vorhergehenden Ansprüche, **dadurch gekennzeichnet, dass** die vom Greiforgan (28) mit Pilzen (20) gefüllten Behältnisse (34) über eine Fördereinrichtung (42) von dem Automaten (26) automatisch zu einer Sammelstation gefördert werden.

9. Vorrichtung (1) nach einem der vorhergehenden Ansprüche, **dadurch gekennzeichnet, dass** das Greiforgan (28) mehrere Greiffinger (29) aufweist, wobei die Greiffinger (29) verformbare Auflageelemente (27) aufweisen.

10. Vorrichtung (1) nach Anspruch 9, **dadurch gekennzeichnet, dass** die verformbaren Auflageelemente (27) als elastische Lamellen ausgeführt sind, die nebeneinander, parallel zueinander und parallel zur Längserstreckung des Greiffingers (29) angeordnet sind.

11. Vorrichtung (1) nach Anspruch 9 oder 10, **dadurch gekennzeichnet, dass** die Greiffinger (29) von einer wechselbaren Elastomerhülle, vorzugsweise aus Latex, überzogen sind, welche die Auflageelemente (27) abdeckt und eine Anlagefläche der Greiffinger (29) an den aufgenommenen Pilzen (20) bildet.

12. Vorrichtung (1) nach einem der vorhergehenden Ansprüche, **dadurch gekennzeichnet, dass** der Automat (26) ein Magazin (35) für zu befüllende Behältnisse (34) aufweist.

13. Vorrichtung (1) nach Anspruch 12, **dadurch gekennzeichnet, dass** das Magazin (35) auswechselbar ist oder verstellt werden kann, um Behältnisse (34) unterschiedlicher Geometrien aufnehmen zu können.

## Claims

1. System (10) for cultivating and harvesting mushrooms (20), with
- at least one picking rack (12), wherein the mushrooms (20) growing on a substrate are arranged on the picking rack (12) in at least one plane,
- at least one conveyor belt (14), which has at least one recess (18, 19) for receiving the harvested mushrooms (20), and
- at least one automat (26) with a gripping organ (28), which takes the mushrooms (20) ingested on the conveyor belt (14) off the conveyor belt (14) and places them in containers (34),
**characterized by,**
- a laser scanner (40) which captures three-dimensional geometric data of the mushrooms (20) ingested on the conveyor belt (14), and
- an evaluation device which evaluates the captured three-dimensional geometric data of the mushrooms (20) to control the gripping organ (28).

2. System (10) according to claim 1, **characterized in that** the evaluation device determines the individual weight of the mushrooms (20) on the basis of the three-dimensional geometric data.

3. System (10) according to claim 1 or 2, **characterized in that** a separation device (22) for separating the stem ends (21) of the mushrooms (20) ingested on the conveyor belt (14) is arranged at the conveyor belt (14), wherein the separation device (22) has at least one cutting edge (24) which can be adjusted in the cutting position.

4. Device (1) according to claim 3, **characterized in that** the cutting edge (24) is height-adjustable in order to cut off the stem ends (21) of the mushrooms (20) ingested on the conveyor belt (14) at different stem heights.

5. Device (1) according to any one of claims 1 to 4, **characterized in that** the recess (19) of the conveyor belt (14) is at least one hole (19) let into the conveyor belt (14).

6. Device (1) according to claim 5, **characterized in that** the conveyor belt (14) has several recessed holes (19), wherein the holes have a uniform spacing from one another along the longitudinal extension of the conveyor belt (14).

7. Device (1) according to any one of the preceding claims, **characterized in that** the containers (34) are arranged on both sides of the conveyor belt (14) in the gripping region of the gripping organ (28).

8. Device (1) according to any one of the preceding claims, **characterized in that** the containers (34) filled with mushrooms (20) by the gripping organ (28) are automatically conveyed to a collecting station by the automat (26) via a conveyor system (42).

9. Device (1) according to any one of the preceding claims, **characterized in that** the gripping organ (28) has several gripping fingers (29), wherein the gripping fingers (29) have deformable supporting elements (27).

10. Device (1) according to claim 9, **characterized in that** the deformable supporting elements (27) are designed as elastic lamellae which are arranged next to each other, parallel to each other and parallel to the longitudinal extent of the gripping finger (29).

11. Device (1) according to claim 9 or 10, **characterized in that** the gripping fingers (29) are covered by an exchangeable elastomeric cover, preferably of latex, which masks the supporting elements (27) and forms an attachment surface of the gripping fingers (29) to the ingested mushrooms (20).

12. Device (1) according to any one of the preceding claims, **characterized in that** the automat (26) has a magazine (35) for containers (34) to be filled.

13. Device (1) according to claim 12, **characterized in that** the magazine (35) is exchangeable or can be adjusted to accommodate containers (34) of different geometries.

## Revendications

1. Système (10) pour la culture et la récolte de champignons (20), avec
- au moins un support de cueillette (12), les champignons (20) poussant sur un substrat étant disposés sur le support de cueillette (12) dans au moins un plan,
- au moins une bande transporteuse (14), qui présente au moins une exclusion (18, 19) pour recevoir les champignons (20) récoltés, et
- au moins un automate (26) avec organe de préhension (28), qui prend de la bande transporteuse (14) les champignons (20) ramassés sur la bande transporteuse (14) et les place dans des récipients (34),
**caractérisé par,**
- un scanner laser (40) qui saisit des données géométriques tridimensionnelles des champignons (20) reçus sur la bande transporteuse (14), et
- un dispositif d'évaluation, qui évalue les données géométriques tridimensionnelles des champignons (20) pour la commande l'organe de préhension (28).

2. Système (10) selon la revendication 1, **caractérisé en ce que** le dispositif d'évaluation détermine le poids individuel des champignons (20) à l'aide les données géométriques tridimensionnelles.

3. Système (10) selon la revendication 1 ou 2, **caractérisé en ce qu'**un dispositif de séparation (22) est disposé à la bande transporteuse (14) pour séparer les extrémités de pied (21) des champignons (20) reçus sur la bande transporteuse (14), le dispositif de séparation (22) ayant au moins une lame réglable (24) en position de coupure.

4. Dispositif (1) selon la revendication 3, **caractérisé en ce que** la lame (24) est réglable en hauteur pour couper les extrémités (21) des pieds des champignons (20) reçus sur la bande transporteuse (14) à différentes hauteurs de pied.

5. Dispositif (1) selon l'une des revendications 1 à 4, **caractérisé en ce que** l'exclusion (19) de la bande transporteuse (14) est au moins un trou (19) ménagé dans la bande transporteuse (14).

6. Dispositif (1) selon la revendication 5, **caractérisé en ce que** la bande transporteuse (14) présente plusieurs trous encastrés (19), les trous étant espacés les uns des autres de manière régulière le long de l'extension longitudinale de la bande transporteuse (14).

7. Dispositif (1) selon l'une des revendications précédentes, **caractérisé en ce que** les récipients (34) sont disposés des deux côtés de la bande transporteuse (14) dans la zone de préhension de l'organe de préhension (28).

8. Dispositif (1) selon l'une des revendications précédentes, **caractérisé en ce que** les récipients (34) remplis de champignons (20) par l'organe de préhension (28) sont automatiquement transportés par l'automate (26) vers un poste de collecte par un dispositif de transport (42).

9. Dispositif (1) selon l'une des revendications précédentes, **caractérisé en ce que** l'organe de préhension (28) présente plusieurs doigts de préhension (29), les doigts de préhension (29) présentant des éléments d'appui déformables (27).

10. Dispositif (1) selon la revendication 9, **caractérisé en ce que** les éléments d'appui déformables (27) sont réalisés sous la forme de lamelles élastiques qui sont disposées côte à côte, parallèlement les unes aux autres et parallèlement à l'extension longitudinale du doigt de préhension (29).

11. Dispositif (1) selon la revendication 9 ou 10, **caractérisé en ce que** les doigts de préhension (29) sont recouverts d'une enveloppe élastomère interchangeable, de préférence en latex, qui recouvre les éléments d'appui (27) et forme une surface d'appui des doigts de préhension (29) sur les champignons (20) reçus.

12. Dispositif (1) selon l'une des revendications précédentes, **caractérisé en ce que** l'automate (26) comporte un magasin (35) de récipients (34) à remplir.

13. Dispositif (1) selon la revendication 12, **caractérisé en ce que** le magasin (35) est interchangeable ou peut être déplacé afin de pouvoir recevoir des récipients (34) de différentes géométries.
